# EUROPEAN PATENT SPECIFICATION

(11) **EP 4 127 039 B1**
(45) Date of publication and mention of the grant of the patent: **20.11.2024**
(21) Application number: 21716209.8
(22) Date of filing: 06.04.2021
(51) Int. Cl.: C08K 3/04, C08K 5/00

(54) **HIGH DARKNESS AND HIGH GLOSS DIMENSIONALLY STABLE THERMOPLASTIC SMMA MOLDING COMPOSITION**
FORMSTABILE THERMOPLASTISCHE SMMA-FORMMASSE MIT HOHER DUNKEL- UND GLANZGRAD
COMPOSITION À MOULER DE SMMA THERMOPLASTIQUE DIMENSIONNELLEMENT STABLE À CARACTÈRE TRÈS FONCÉ ET À BRILLANT ÉLEVÉ

(30) Priority: 02.04.2020 EP 20167702
(43) Date of publication of application: 08.02.2023
(73) Proprietor: INEOS Styrolution Group GmbH, 60325 Frankfurt (DE)
(72) Inventor: RATTAY, Felix, 41472 Neuss (DE); COCHRAN, Thomas W., Wilmington, Illinois 60481 (US); ROWLETT, Jarrett R., Oswego, Illinois 60543 (US)
(74) Representative: Jacobi, Markus Alexander
(86) International application number: PCT/EP2021/058870
(87) International publication number: WO 2021/198528

(56) References cited:
- WO-A1-2019/020686
- US-A1- 2007 129 470
- US-A1- 2016 222 185

## Description

The invention relates to a thermoplastic molding composition that is dimensionally stable in humid environments and has a high UV stability in combination with a dark color and high gloss. The invention further relates to a method for preparing said thermoplastic molding (resin) composition, methods of preparing shaped articles from said thermoplastic molding composition, a shaped article comprising said thermoplastic molding composition and the use of said thermoplastic molding composition for preparing a shaped article with high gloss and a dark color.

The coloring of various thermoplastic materials is described in the literature, but the production of molding compositions having very dark colors, especially deep black, and high gloss, while retaining dimensional stability in humid environments has hitherto been problematic. This in particular applies to specific types of styrene copolymer compositions.

EP-A 1685192 discloses a polymer composition used for laser inscription, based on a rubber latex, a black pigment and a dye. US 2005/0014863 and patent US 7077898 disclose pigment-containing polymer compositions comprising carbon black and another pigment described via a general formula.

Black colors are often achieved in molding compositions by using carbon black pigment ("pigment black"). Quantities of carbon black of 0.1% to 5% by weight have been proposed for black coloring of polymers, but it is often not possible to achieve deep black.

WO2015/036526 and US 2016/222185 (INEOS Styrolution) disclose deep black thermoplastic molding compositions having high gloss. These compositions are based on styrene copolymers, polymethyl methacrylate, polycarbonates or polyester carbonates that are combined with carbon black and at least a dye soluble in the molding compositions. However, there is still a need for improved thermoplastic molding compositions having high gloss and a deep dark color, in particular with regard to UV stability and dimensional stability in humid environments.

It was surprisingly found that a combination of these required properties can be achieved, if the thermoplastic molding compositions are based on a copolymer of vinylaromatic monomers and methyl methacrylate monomers, with the methyl methacry-late content being in a specific range.

One aspect of the present invention is a thermoplastic molding composition, comprising the components (a), (b) and (c) and optionally (d), wherein it comprises (or consists of):
(a) 90 to 99.5% by weight, in particular 95 to 99.5% by weight, based on the total weight of the thermoplastic molding composition, of at least one copolymer (a),
   which comprises 30 to 60 % by weight, in particular 40 to 60% by weight, of repeating units derived from a vinylaromatic monomer (a1), in particular styrene,
   and comprises 40 to 70 % by weight, in particular 40 to 60% by weight, of repeating units derived from methyl methacrylate (a2);
(b) 0.1 to 1.5% by weight, in particular 0.2 to 1.5% by weight, based on the total weight of the thermoplastic molding composition, of at least two dye components (b1) and (b2) of different color families, soluble in the thermoplastic molding composition;
(c) 0.01 to 5% by weight, in particular 0.1 to 3 % by weight, based on the total weight of the thermoplastic molding composition, of carbon black pigment (c); and
(d) optionally up to 5% by weight, in particular 0.1 to 2 % by weight, based on the total weight of the thermoplastic molding composition, of one or more further additives (d), which are different from (b) and (c).

This thermoplastic molding composition (or a molded part thereof) has a deep-black color with L*-values from 0.5 to 2.0, often 0.6 to 1.5, as measured with 45°/0° geometry in accordance with DIN 5033 (Color Measurement, e.g. 1983), and a high gloss of more than 93.0, often more than 95, as measured in accordance with DIN 67530. The total weight of components (a) to (d) preferably give a total of 100 percent by weight of the thermoplastic molding composition.

In one embodiment of the invention, the thermoplastic molding composition comprises as component (b) at least two different dye components (b1), (b2), in particular three different dye components (b1), (b2) and (b3), which cover complementary color regions. Complementary color regions are e.g. green, red and yellow.

In one embodiment of the invention, the thermoplastic molding composition comprises as component (b) at least two different dye components (b1), (b2), wherein the two different dye components (b1) and (b2) cover complementary color regions, in particular green and red, and wherein (b1) and (b2) are used in a weight ratio of 0.7 : 1.0 to 1.3 : 1.0, in particular 0.8 : 1.0 to 1.2 : 1.0.

The dye component (b1) is in one embodiment a green anthrachinone, such as e.g. Solvent Green 3 (see 1,4-Bis(p-tolylamino)anthrachinone); and component (b2) is e.g. Solvent Red 179 (see 14H-Benz[4,5]isochino[2,1-a]perimidin-14-one).

In one embodiment, the thermoplastic molding composition comprises, as component (c), from 0.01 to 5%, often 0.02 to less than 1 % by weight of a carbon black pigment (c), which, preferably, has an average primary particle size in the range from 5 to 100 nm, in particular 7 to 60 nm.

In one embodiment, the thermoplastic molding composition comprises as component (a) at least one copolymer of styrene, and/or α-methylstyrene with methyl methacrylate. This can be e.g. a styrene-MMA-copolymer, AMS-MMA copolymer or S-AMS-MMA terpolymer. Also mixtures of these can be used.

In one embodiment, the thermoplastic molding composition contains a copolymer (a) consisting of 40 to 58% by weight, preferably 50 to 56% by weight, based on the total weight of copolymer (a), of repeating units derived from styrene, and 42 to 60% by weight, preferably 43 to 48% by weight, based on the total weight of copolymer (a), of repeating units derived from methyl methacrylate.

In one embodiment, the thermoplastic molding composition is consisting of components (a), (b), (c) and (d).

In one embodiment, the thermoplastic molding composition contains a component (d) which is present in an amount of from 0.1 to 2% by weight, based on the total weight of the thermoplastic molding composition, and comprises at least one light stabilizer, in particular a hindered amine light stabilizer (HALS), and/or at least one antioxidant.

In one embodiment, the thermoplastic molding composition contains a component (d) consisting of an antioxidant, at least one hindered amine light stabilizer (HALS) and optionally at least one UV absorber different from carbon black.

The various components are described in more detail below.

The invention also relates to a method for preparing the thermoplastic molding composition, comprising the step of mixing and/or compounding components (a), (b) and (c), and optionally (d). The various process steps are per se known in the literature and depend on the volumes of molding composition to be prepared and other factors.

The invention also covers a method for preparing a shaped article with high gloss and a high darkness color, wherein the thermoplastic molding composition as described above is molded into the shape of the shaped article via extrusion, injection molding, rotomolding, casting, blow molding, spraying, spinning, rolling or weaving, in particular extrusion or injection molding.

High darkness color in particular means a deep-black color with L*-values from 0.5 to 2.0, often 0.6 to 2.0, as measured in accordance with norm DIN 5033 (2017). High gloss in particular means a value of more than 93.0, in particular more than 95.0 as measured in accordance with norm DIN 67530.

In one embodiment, the invention relates to a method for preparing a shaped article with high gloss and a high darkness color, wherein a shaped substrate is coated with the thermoplastic molding composition as described above. Typical coating processes are described in the literature.

Shaped articles comprising (or made from) the thermoplastic molding composition as described, are a further subject of the invention.

In one embodiment, the shaped article described above, contains the thermoplastic molding composition, which is present (used) as a coating on a shaped substrate.

One further aspect is the use of the thermoplastic molding composition as described for preparing a shaped article with high gloss and a high darkness color.

The individual components are described in more detail below.

### Copolymer component (a)

The copolymer (a) in the thermoplastic molding composition of the present invention is a copolymer comprising repeating units derived from a vinyl-aromatic monomer (a1), and repeating units derived from methyl methacrylate (a2). In the context of the present invention, the term "repeating unit derived from" means that the repeating unit is the unit which is formed from the respective monomer during polymerization, i.e., "derived from" does not include other forms of derivatization, such as replacement of substituents.

The copolymer (a) necessarily comprises from 40 to 70% by weight, preferably from 40 to 60% by weight, more preferably from 42 to 50% by weight, based on the total weight of copolymer (a) of repeating units derived from methyl methacrylate (a2). If the amount is lower than 10 % by weight, the UV stability of the thermoplastic molding composition of the invention might deteriorate, whereas if the amount is higher than 70% by weight, the dimensional stability in humid environments can be significantly decreased.

The copolymer (a) comprises from 30 to 60% by weight, preferably from 40 to 60% by weight, based on the total weight of copolymer (a) of repeating units derived from monomer(s) (a1), which can be in particular styrene.

Preferably, component (a) is present in an amount of from 90 to 99.5% by weight, more preferably in an amount of from 95 to 99.5% by weight, even more preferably in an amount of from 98.4 to 99.4% by weight, based on the total weight of the thermoplastic molding composition.

The term "copolymer" as used herein for copolymer (a) is understood in the broadest sense as any polymer comprising two or more different types of monomers (i.e., (a1) at least one kind of styrene monomer and (a2) at least MMA) covalently connected with another. The terms indicating that the copolymer (a) comprises monomers or the polymer consists of monomers will be understood by those skilled in the art as meaning that the monomers in this context are monomeric moieties embedded into the copolymer strand.

In a preferred embodiment, the vinylaromatic monomer (a1) and methyl methacrylate (a2) in the copolymer (a) are not bound to rubber monomers, such as butadiene moieties. Preferably the vinylaromatic monomer (a1) is styrene.

Preferably, the melt flow index (MFI) (determined at a temperature of 200°C and at a load of 5 kg according to ASTM procedure D1238) of the copolymers (a) according to the present invention is less than 50 g/10 min, more preferably less than 20 g/10 min, even more preferably of less than 10 g/10 min, often less than 5 g/10 min. Preferably, the ASTM procedure D1238 is used in the version of the year 2013.

In copolymer (a), the different types of monomer moieties may be either evenly and homogeneously distributed over the copolymer (random copolymer) or may be located at a defined area of the polymer strand(s), i.e. in a block (block copolymer). As used herein, the term "block copolymer" may be understood in the broadest sense as any copolymer having a defined polymer structure. Preferably, the copolymer (a) is a random copolymer.

Optionally, the copolymer (a) according to the present invention may also contain one or more cross-linking moiety/moieties such as, e.g., divinyl-benzene, in its polymer strand. Preferably, such cross-linking agents do constitute for not more than 25 wt.-% of the copolymer mass, more preferably not more than 10 wt.-% of the copolymer mass, often not more than 5 wt.-% of the copolymer mass. Particularly preferably, the copolymer (a) does not contain any cross-linking moieties.

The copolymer (a) according to the present invention may bear a linear, circular or branched structure. A circular structure is a copolymer strand wherein both ends are connected with another. As used herein, the term "branched structure" may be understood in the broadest sense any structure deviating from a plain linear or circular structure. Accordingly, in a polymer of branched structure, there is at least one monomer binding to three or more other monomer(s). Preferably, the copolymer (a) of the present invention is an essentially linear or circular copolymer, more preferably an essentially linear copolymer, in particular a linear random copolymer.

As used herein, a vinylaromatic monomer (a1) may be understood in the broadest sense as any moiety bearing at least one vinyl residue (-CH=CH₂) in its monomeric form and at least one monocyclic or polycyclic aromatic residue known in the art. The person skilled in the art will notice that upon polymerization, the double bond of the vinyl residue is cleaved and is embedded into the polymeric strand. In accordance with international commonly designation standards, the monomeric moiety as well as the moiety embedded into the polymeric strand is designated as vinylaromatic monomer. Preferably, the vinylaromatic monomer bears one vinyl residue and one monocyclic aromatic residue, such as styrene.

In a preferred embodiment, the one or more vinylaromatic monomers (a1) comprise(s) styrene and/or one or more styrene derivative(s). As used herein, a styrene derivative may be any derivative of styrene known in the art such as, e.g.: alkylated styrene (e.g., alpha-methylstyrene, alpha-ethylstyrene, 2-methylstyrene, 3-methylstyrene, 4-methylstyrene, 2-ethylstyrene, 3-ethylstyrene, 4-ethylstyrene, 2,3-dimethylstyrene, 2,4-dimethylstyrene, 2,5-dimethylstyrene, 2,6-dimethylstyrene,2,3-diethylstyrene, 2,4-diethylstyrene, 2,5-diethylstyrene, 2,6-diethylstyrene, 2-methyl-3-ethylstyrene,2-methyl-4-ethylstyrene, 2-methyl-5-ethylstyrene, 2-methyl-6-ethylstyrene, 3-methyl-2-ethylstyrene, 3-methyl-4-ethylstyrene, 3-methyl-5-ethylstyrene, 3-methyl-6-ethylstyrene,4-methyl-5-ethylstyrene, 4-methyl-6-ethylstyrene, 2-ethyl-3-methylstyrene, 2-ethyl-4-methylstyrene, 2-ethyl-5-methylstyrene, 2-ethyl-6-methylstyrene, 3-ethyl-4-methylstyrene, 3-ethyl-5-methylstyrene, 3-methyl-6-ethylstyrene, 4-ethyl-5-methyl-styrene, 4-ethyl-6-methylstyrene), halogenated styrene (e.g., e.g., 2-chloro-styrene, 3-chloro-styrene, 4-chloro-styrene, 2-fluoro-styrene, 3-fluoro-styrene, 4-fluoro-styrene, 2,3-di-chloro-styrene, 2,4-di-chloro-styrene, 2,5-di-chloro-styrene, 2,6-di-chloro-styrene,2,3-di-fluoro-styrene, 2,4-di-fluoro-styrene, 2,5-di-fluoro-styrene, 2,6-di-fluoro-styrene, 2-chloro-3-fluoro-styrene, 2-chloro-4-fluoro-styrene, 2-chloro-5-fluoro-styrene, 2-chloro-6-fluoro-styrene, 3-chloro-2-fluoro-styrene, 3-chloro-4-fluoro-styrene, 3-chloro-5-fluoro-styrene, 3-chloro-6-fluoro-styrene, 4-chloro-5-fluoro-styrene, 4-chloro-6-fluoro-styrene, 2-fluoro-3-chloro-styrene, 2-fluoro-4-chloro-styrene, 2-fluoro-5-chloro-styrene, 2-fluoro-6-chloro-styrene, 3-fluoro-4-chloro-styrene, 3-fluoro-5-chloro-styrene, 3-chloro-6-fluoro-styrene, 4-fluoro-5-chloro-styrene, 4-fluoro-6-chloro-styrene) or hydroxystyrene styrene (e.g., 2-hydroxystyrene, 3-hydroxystyrene, 4-hydroxystyrene, 2,3-dihydroxystyrene, 2,4-dihydroxystyrene, 2,5-dihydroxystyrene, 2,6-dihydroxystyrene).

Particularly preferably, the styrene derivative according to the present invention is alpha-methylstyrene or styrene. In a preferred embodiment, the one or more vinylaromatic monomers (a1) comprise styrene. In an even more preferred embodiment, the one or more vinylaromatic monomers (a1) comprise at least 50 wt.-% styrene, preferably at least 70 wt.-% styrene, more preferably at least 80 wt.-% styrene, even more preferably at least 90 wt.-% styrene, based on the total weight of (a1). In a particularly preferred embodiment, the only vinylaromatic monomer (a1) in said copolymer (a) is styrene.

As used herein, a methyl methacrylate (MMA) (a2) may be understood in the broadest sense. Herein, the terms "methyl methacrylate", "methyl methacrylate moiety", "methyl methacrylate monomer", "methyl methacrylate monomer moiety" and similar terms may be understood interchangeably.

As noted above, the copolymer (a) according to the present invention may be a random polymer or a block polymer. In a preferred embodiment, the copolymer is a random copolymer. As used herein, a random polymer is a copolymer wherein the different types of monomer moieties (i.e., at least (a1) and (a2)) are essentially evenly and homogeneously distributed over the copolymer.

In one embodiment, the copolymer (a) consists of 40 to 58% by weight, preferably 50 to 56% by weight, based on the total weight of copolymer (a), of repeating units derived from a vinylaromatic monomer (a1), in particular styrene, and 42 to 60% by weight, preferably 43 to 48% by weight, based on the total weight of copolymer (a), of repeating units derived from methyl methacrylate (a2).

In general, a copolymer (a) according to the present invention may be obtained by any means suitable therefore known in the art. The person skilled in the art knows methods suitable for obtaining such copolymer (a). Conventional polymerization procedures may be used in the preparation of copolymer (a) according to the present invention. Component (a) is e.g. obtained in a known manner by bulk, solution, suspension, precipitation or emulsion polymerization. Details of these processes are described, for example, in Ullmanns Encyclopedia of Industrial Chemistry, 7th Edition, Wiley 2011, pages 475 ff.

Exemplarily, the copolymer (a) may be prepared by emulsion polymerization, solution polymerization or bulk polymerization. Preferably, heat or radical initiation may be used (including living polymerization methods).

Methyl methacrylate (MMA) monomers (a) as well as numerous vinylaromatic monomers are commercially available. Others can be easily obtained by standard chemical processes.

Vinyl monomers may also be obtained from precursor molecules. Exemplarily, precursor molecules bearing an ethyl residue (-CH₂-CH₃) may be oxidized/ dehydrated, halogenated precursor molecules bearing a halogenethyl residue (e.g., -CHCl-CH₃, -CH₂-CH₂Cl) may be dehalogenated by eliminating the respective acid (e.g., HCl) or hydroxylated precursor molecules bearing a hydroxyethyl residue (e.g., -CHOH-CH₃, -CH₂-CH₂OH) may be dehydrogenated by eliminating water (e.g., H₂O). Then, the respective vinyl monomers are obtainable.

Copolymerization for the preparation of copolymer (a) may optionally be carried out in the presence of, e.g., one or more solvent(s) and/or one or more initiator(s) (e.g., one or more radical starter(s)). Exemplarily, initiation of copolymerization may be started by thermal decomposition of an initiator (e.g an organic peroxide (e.g., dicumyl peroxide) or an azo compound), photolysis (e.g., with metal iodides, metal alkyls or azo compounds (e.g., azoisobutylnitrile, AIBN)), a peroxide initiator (e.g., benzoyl peroxide), an initiator composition enabling a redox reaction (e.g., reduction of hydrogen peroxide or an alkyl hydrogen peroxide by means of iron ions or other reductants such as, e.g, Cr²⁺, V²⁺, Ti³⁺, Co²⁺ or Cu⁺), persulfate activation, ionizing radiation (e.g., by means of α-, β-, γ- or x-rays), electrochemical activation, plasma activation, sonication (e.g., at around 16 kHz) or a ternary Initiator (e.g., benzoyl peroxide-3,6-bis(o-carboxybenzoyl)-N-isopropylcarbazole-di-η5-indenyl-zicronium dichloride optionally in combination with a metallocene (e.g., indenylzirconium) and/or a peroxide (e.g., benzoyl peroxide).

In a preferred embodiment, the copolymerization comprises heating of the reaction mixture comprising the monomers above a temperature above 100°C and/or adding one or more polymerization initiator(s) to said reaction mixture.

The reaction mixture can be maintained or brought to conditions allowing chain elongation of the polymer. For instance, the temperature is set according to the monomer/copolymer content of the reaction mixture. Exemplarily, as indicated above, the temperature may optionally also be varied during incubation, such as, e.g., constantly or stepwise increased during the polymerization process.

Exemplarily, methods for producing a copolymer (a) as used in the present invention may be conducted as shown in any of patents GB 464688, GB 531956, GB 863279 or WO 2003/051973.

### Dye components (b)

The dye components (b) comprise at least two dye components (b1) and (b2) of different, in particular complementary color families. The dye components are soluble in the thermoplastic molding composition.

One dye (b1), soluble in the thermoplastic molding, can be a dye or a combination of dyes having any color (e.g. green). The further dye (b2), should be from a different color family, in particular a complementary color (e.g. reddish shades as complementary to green color). Often, three different dye components (b1), (b2) and (b3) are used.

In one embodiment, the at least one dye component (b) comprises as green dye (b1) the commercial product Solvent Green 3.

In one embodiment, the at least one organic red dye (b2) comprises Solvent red 179, in another embodiment the organic red dye consists of Solvent Red 179, see above. Also the commercial product Solvent Yellow 93 can be used, (see 4-[(1,5-Dihydro-3-methyl-5-oxo-1-phenyl-4H-pyrazol-4-ylidene)methyl]-2,4-dihydro-5-methyl-2-phenyl-3H-pyrazol-3-one).

Preferably, component (b) is present in an amount of from 0.1 to 5% by weight, more preferably in an amount of from 0.2 to 1.5% by weight, even more preferably in an amount of from 0.5 to 1% by weight, based on the total weight of the thermoplastic molding composition.

### Carbon black component (c)

The component (c) is carbon black and is not limited to any particular carbon black. Preferably, component (c) is carbon black with an average primary particle size in the range from 5 to 100 nm, more preferably 7 to 60 nm. Typically, the carbon black components for the invention have more than 95% by weight carbon content and specific surface area greater than 100 m²/g. Two examples of typical commercially available products are Black Pearls 880 (Cabot Corperation), which can be used in the examples, or Printex 90 (Orion Engineered Carbons GmbH).

It has been surprisingly found that with increasing amounts of component (c), despite the black color of carbon black, the thermoplastic molding composition of the invention appears less dark and/or less glossy. This can be attributed to the reduction of clarity when carbon black is added to the composition.

Therefore, for the thermoplastic molding composition of the invention to have the desired high darkness color and high gloss, it is of advantage that the amount of component (c) does not exceed 3 %, often 1% by weight, based on the total weight of the thermoplastic molding composition.

Preferably, the amount of carbon black in the thermoplastic molding composition of the invention does not exceed 0.5% by weight, more preferably 0.3% by weight, even more preferably 0.2% by weight, based on the total weight of the thermoplastic molding composition.

However, for some applications it is beneficial if carbon black (c) is present in the thermoplastic molding composition to a higher amount, as it e.g. contributes to the UV stability of the composition.

Component (c) is present in the thermoplastic molding composition at least with 0.01% by weight, often at least 0.02% by weight, based on the total weight of the thermoplastic molding composition.

In another embodiment, component (c) is present in an amount of from 0.01 to 0.5% by weight, based on the total weight of the thermoplastic molding composition. In yet another embodiment, component (c) is present in an amount of from 0.02 to 0.1% by weight, based on the total weight of the thermoplastic molding composition.

### Further additives of component (d)

The thermoplastic molding composition of the invention can comprise, alongside components (a), (b), and (c), one or more further additives (d) which differ from components (b), and (c) and which are often known for the use in plastic compositions.

Often, while improving certain properties of thermoplastic molding compositions, large amounts of additives may reduce their clarity and thus make the composition appear less dark and/or glossy. Therefore, for the thermoplastic molding composition of the invention to have the desired high darkness and high gloss, it is necessary that the amount of component (d) does not exceed 5%, in particular 2%, often 1 % by weight, based on the total weight of the thermoplastic molding composition.

Preferably, the amount of further additives (d) in the thermoplastic molding composition of the invention does not exceed 1% by weight, more preferably 0.5% by weight, even more preferably 0.3% by weight, based on the total weight of the thermoplastic molding composition.

However, for some applications it is beneficial if further additives (d) are present in the thermoplastic molding composition, as they may significantly improve other properties of the composition that may be required for specific applications.

If component (d) is present in the thermoplastic molding composition of the invention, the amount is therefore at least 0.01% by weight, often at least 0.02% by weight, often 0.1 to 2 % by weight, based on the total weight of the thermoplastic molding composition.

In one embodiment, component (d) is not present in the thermoplastic molding composition of the invention. In another embodiment, component (d) is present in an amount of from 0.01 to 1% by weight, based on the total weight of the thermoplastic molding composition. In yet another embodiment, component (c) is present in an amount of from 0.1 to 2% often 0.1 to 1 % by weight by weight, based on the total weight of the thermoplastic molding composition.

Examples mentioned for component (d) are: antistatic agents, antioxidants, stabilizers for improving thermal stability, for increasing resistance to light, and for increasing hydrolysis resistance and chemicals resistance, agents to counteract decomposition by heat, process stabilizers, metal deactivators, flow agents, anti-sticking agents, metal ions, fatty acids, strengtheners, filling agents, flame retardants, anti-squeak agents, and impurities derived from the polymerization process of copolymer (a).

These further additives (d) can be added at any stage of the production process, but preferably at an early juncture in order to make early use of the stabilizing effects (or other specific effects) of the additional substance. Heat stabilizers and oxidation retarders are usually metal halides (chlorides, bromides, iodides) deriving from metals of group I of the Periodic Table of the Elements (for example Li, Na, K, Cu).

Suitable stabilizers as component (d) are the usual hindered phenols, and vitamin E and compounds of analogous structures. Benzophenones, resorcinols, salicylates, benzotriazoles, and other compounds are also suitable.

Quantities of these usually are from 0 to 2% by weight, preferably from 0.01 to 2% by weight, based on the total weight of the thermoplastic molding composition.

Suitable lubricants and mold-release agents are stearic acids, stearyl alcohols, stearic esters, and in general terms higher fatty acids, derivatives thereof, and corresponding fatty acid mixtures having from 12 to 30 carbon atoms. The quantities of these additions may be - insofar as they are present - in the range from 0.05 to 1% by weight, based on the total weight of the thermoplastic molding composition.

Other additional substances that can be used are silicone oils, oligomeric isobutylene, and similar substances, and the usual quantities - insofar as these are present - are from 0.05 to 2% by weight, based on the total weight of the thermoplastic molding composition. It is likewise possible in principle to use pigments, dyes other than component (b), optical brighteners, titanium dioxide, cadmium sulfides, and derivatives of perylene-tetracarboxylic acid.

Quantities usually used of processing aids and stabilizers, lubricants, and antistatic agents are from 0 to 2% by weight, preferably from 0.01 to 2% by weight, based on the total weight of the thermoplastic molding composition..

In one embodiment, component (d) is present in an amount of from 0.1 to 2% by weight, based on the total weight of the thermoplastic molding composition, and comprises at least one light stabilizer and/or at least one antioxidant. In this embodiment, the at least one light stabilizer preferably comprises at least one hindered amine light stabilizer (HALS).

Suitable HALS can be monomeric, oligomeric or combinations of these stabilizers, e.g., one or more compounds selected from derivatives of 2,2,6,6-tetramethylpiperidine, preferably from the group consisting of derivatives of 2,2,6,6-tetramethyl-4-piperidyl-substituted organic compounds more preferably from the group consisting of derivatives of bis(2,2,6,6-tetramethyl-4-piperidyl)dicarboxylic acid diesters, in particular bis(2,2,6,6-tetramethyl-4-piperidyl)sebacate. As HALS stabilizers, preferably the products Tinuvin^{®} 770, Cyasorb^{®} UV-3853 and Chimassorb^{®} 944 can be used, either as a single component or two or three of them together.

More preferably, in this embodiment the at least one light stabilizer comprises at least one hindered amine light stabilizer (HALS) and at least one UV absorber different from carbon black (c) and HALS.

As suitable UV absorbers, different from carbon black and HALS, the component (d) may comprise one or more compounds selected from organic UV absorbers, preferably from the group consisting of substituted benzotriazoles, substituted benzophenones, substituted triazines, oxalanilides, substituted resorcinols, salicylates and cyanoacrylates, more preferably from the group consisting of 2-(2-hydroxyphenyl) benzotriazoles, 2-hydroxy-benzophenones, hydroxyphenyl-s-triazines and oxalanilides, in particular benzotriazoles, such as Tinuvin^{®} 329 (BASF).

In another embodiment, component (d) consists of an antioxidant and mixture of at least one hindered amine light stabilizer (HALS) and optionally at least one UV absorber different from carbon black (c) and HALS, wherein component (d) contains the at least one UV absorber different from carbon black and HALS if the thermoplastic molding composition does not comprise carbon black (c). As UV-absorber preferably Tinuvin^{®} 329 can be used.

Suitable antioxidants are, e.g., one or more compounds selected from monophosphite-based antioxidants, diphosphite-based antioxidants and sterically hindered phenolic antioxidants.

If one or more antioxidants are present, they are preferably selected from:
monophosphite-based antioxidants, such as trisubstituted monophosphite derivatives, diphosphite-based antioxidants, such as substituted pentaerythrirol diphosphite derivatives and sterically hindered phenolic antioxidants, such as 2,6-di-tertbutylphenolic derivatives. More preferably, the antioxidant is one or more compounds selected from triphenyl substituted monophosphite derivatives, di-phenyl substituted pentaerythritol diphosphite derivatives and mono-substituted 2,6-di-tert-butylphenolic derivatives. One embodiment, the one or more antioxidant is one or more of tris(2,4-di-tert-butylphenyl)phosphite, bis(2,4-di-tert-butylphenyl)pentaerythritol diphosphite and octadecyl-3-[3,5-di-tert-butyl-4-hydroxyphenyl]propionate.

In one embodiment, the thermoplastic molding composition of the invention comprises (or consists of):
(a) 95 to 99.5% by weight, based on the total weight of the thermoplastic molding composition, of the at least one copolymer (a);
(b) 0.2 to 1.5% by weight, based on the total weight of the thermoplastic molding composition, of the at least one dye (b);
(c) 0.1 to 3 %, often 0.1 to 1 % by weight, based on the total weight of the thermoplastic molding composition, of carbon black (c); and
(d) optionally up to 3% by weight, often 0.1 to 2 % by weight, based on the total weight of the thermoplastic molding composition, of the further additives (d).

In another embodiment, the thermoplastic molding composition of the invention comprises 0.1 to 1.0 % by weight, based on the total weight of the thermoplastic molding composition, of further additive(s) (d).

The thermoplastic molding composition of the invention enables the preparation of shaped articles having at the same time high darkness color, high gloss, and high dimensional stability at high humidity.

High darkness in the context of the present invention means that the thermoplastic molding composition or the shaped article prepared therefrom has an L* value, measured at a geometry of 45°/0°of 0.5 to 2.0, see norm DIN 5033.

High gloss in the context of the present invention means that the thermoplastic molding composition or the shaped article prepared therefrom has a gloss, measured with a gloss meter in accordance with DIN 67530, greater than 93.0.

High dimensional stability at high humidity in the context of the present invention means that the thermoplastic molding composition or the shaped article prepared therefrom absorbs only minimal amounts of water, which leads to swelling of the material and thus to changes in its dimensions.

The absorption is considered minimal, if the thermoplastic molding composition or the shaped article prepared therefrom absorbs less than 0.5 wt.-% of water, based on the total weight of the dry composition, at room temperature, measured according to ASTM D 570 with a material of 2.1 mm thickness after submersion in ambient water for at least 72 hours.

Another aspect of the present invention is a method for preparing the thermoplastic molding composition as described above. The mixing or compounding can be performed in any desired manner or by any of the known methods.

However, it is preferable to blend components (a) and (b), and (c) and/or (d), via mixing in the melt, for example by using the components together in an extrusion process (e.g. in a ZSK 30 twin-screw extruder from Coperion), or in a kneading or rolling process, e.g. at temperatures in the range from 160 to 300°C, preferably from 180 to 280°C.

A further aspect of the invention is a method for preparing a shaped article with high gloss and a dark color, wherein the thermoplastic molding composition as described above is molded into the shape of the shaped article via extrusion, injection molding, rotomolding, casting, blow molding, spraying, spinning, rolling or weaving, in particular extrusion or injection molding.

Another aspect of the present invention is a method for preparing a shaped article with high gloss and a dark color, wherein a shaped substrate is coated with the thermoplastic molding composition as described above. An aspect of the present invention is also a shaped article comprising the thermoplastic molding composition as described above.

In one embodiment, the shaped article is formed of the thermoplastic molding composition. In another embodiment, thermoplastic molding composition as described above is present as a coating on a shaped substrate. A further aspect of the present invention is the use of the thermoplastic molding composition as described above for preparing a shaped article with high gloss and a dark color. In each of these aspects, the shaped article may be any shaped article requiring high darkness, gloss and dimensional stability.

For example, shaped articles may be those with deep-black surface and high gloss for the use in motor vehicles, household appliances, electrical equipment, decorative strips, and outdoor cladding, such as spoilers, window frames, cover strips, hoods, panels, or parts of the radiator grille, the antenna cladding, the side mirrors, or of the front or rear lamps.

The invention is further illustrated by the following Examples and patent claims.

### Examples 1 to 6: Preparation of the thermoplastic molding compositions

The thermoplastic copolymer component (a) is prepared by using (a1) styrene (55 wt.-%, based on the total weight of (a1) and (a2)), and (a2) methyl methacrylate (45 wt.-%, based on the total weight of (a1) and (a2)) and a free radical initiator to obtain the SMMA copolymer component. The copolymer obtained has a melt flow index (MFI, at temperature of 200°C and at a load of 5 kg, according to ASTM D1238 (standard method for Melt Flow Rate determination) of less than 10 g/10 min.

A continuous feed of the copolymer from (a1) styrene and (a2) methyl methacrylate and the respective additives in the amounts disclosed in the following Tables 1 and 2 are compounded in a twin screw extruder at a temperature of 210°C. The compositions are extruded into granules. These thermoplastic compositions contain about 98-99 wt.% of copolymer (a) and about 1-2 wt.-% of components (b-d).

From these granules, the thermoplastic color chips having a 2 mm thickness and a size of 60mm x 45mm are molded on a classical injection molding machine (e.g. Arburg GmbH & Co., D-72290 Lossburg)). Compounds 1 to 6 are obtained from the compositions of Examples 1 to 6, respectively.

The various color chips made from the inventive thermoplastic molding compositions and the color chips made from the comparative composition examples in Tables 1 and 2 were subjected to gloss measurements according to DIN 67530 (Gloss measurement of polymer surfaces) at an angle of 20°, and color measurements in the CIE L*a*b* color space with a D65 light source.

Furthermore, the various color chips were submersed in ambient water at room temperature for 72 hours and the water absorption was measured according to ASTM D570 (Standard Test for Water Absorption of polymers, 2018).

**Table 1**

| Percentages given for Compounds 1 to 3 are in weight-% are based on total weight of thermoplastic molding compositions, the copolymer is made from styrene 55 wt.-% and methyl methacrylate 45wt.-%. For comparison, PMMA-compositions (Plexiglas type FT8, Evonik, Germany) and AM-SAN compositions (Luran^{®}HH120 and LuranOH120 SPF 50, both of INEOS Styrolution, Germany) are shown as well. | | | | | | |
|---|---|---|---|---|---|---|
| Thermoplastic compositions | | | | | | |
| Additive | Compound 1 | Compound 2 | Compound 3 | Luran H-120 | Luran H-120 SPF 50 | PMMA |
| Solvent Green 3 | 0.50% | 0.50% | 0.487% | 0.136% | 0.50% | N/A |
| Solvent Red 179 | 0.50% | 0.50% | 0.513% | 0 | 0 | N/A |
| Solvent Violet 13 | 0 | 0 | 0 | 0.664% | 0.20% | N/A |
| Solvent Violet 31 | 0 | 0 | 0 | 0.10% | 0.40% | N/A |
| Solvent Yellow 93 | 0 | 0 | 0 | 0.28% | 0.28% | N/A |
| Carbon Black | 0.025 % | 0.05% | 0.1% | 0.1% | 0.1% | N/A |
| Gloss (20°) | 95.6 | 95.9 | 95.7 | 100 | 98.5 | 77.4 |
| L* | 1.07 | 0.64 | 1.07 | 0.65 | 0.66 | 1.09 |
| a* | -0.01 | 0.01 | -0.15 | 0.07 | 0.05 | -0.16 |
| b* | -0.82 | -0.55 | -0.80 | -1.06 | -1.12 | -0.78 |
| Water Absorption | 0.49% | 0.46% | 0.47% | 0.71% | 0.66% | 1.65% |

These experiments demonstrate the advantageous properties of the colored styrene-methyl methacrylate copolymer (SMMA) compositions as compared to commercial PMMA and to commercial alpha-methyl-styrene-acrylonitrile copolymer products.

The following further examples using Compounds 3a to 6 demonstrate the advantageous properties of colored styrene-methyl methacrylate copolymer (SMMA) compositions containing one, two or three different HALS-stabilizers (e.g. 0.2 to 1.2 %). Optionally they also contain an UV-absorber component (e.g. 0.1 %). Percentages given are in weight-% are based on total weight of thermoplastic molding composition, the copolymer (a) made from styrene 55 wt.-% and methyl methacrylate 45wt.-%.

As UV Absorber, the commercial Tinuvin^{®}329 was used (CAS Number 3147-75-9; 2-Phenol, 2-(2H-benzotriazol-2-yl)-4-(1,1,3,3-tetramethylbutyl).

As HALS 1 component, the commercial product Tinuvin^{®} 770 (CAS Number 52829-07-9; Bis(2,2,6,6,-tetramethyl-4-piperidyl)sebaceate) was used. As HALS 2, Cyasorb^{®} UV-3853 (CAS Number 167078-06-0; 2,2,6,6-tetramethyl-4-piperidinyl stearate) was used. As HALS 3, Chimassorb^{®} 944 (CAS Number 71878-19-8 [70624-18-9 (US)]; Poly[[6-[(1,1,3,3-tetramethylbutyl)amino]-1,3,5-triazine-2,4-diyl][(2,2,6,6-tetramethyl-4-piperidinyl)imino]-1,6-hexanediyl[(2,2,6,6-tetra-methyl-4- piperidinyl)imino]]) was used.

**Table 2**

| Additive | Compound 3a | Compound 4 | Compound 5 | Compound 6 |
|---|---|---|---|---|
| Solvent Green 3 | 0.487% | 0.487% | 0.487% | 0.487% |
| Solvent Red 179 | 0.513% | 0.513% | 0.513% | 0.513% |
| UV Absorber | 0.1% | 0.0% | 0.0% | 0.0% |
| HALS 1 | 0.2% | 0.5% | 0.5% | 0.3% |
| HALS 2 | 0.0% | 0.3% | 0.3% | 0.3% |
| HALS 3 | 0.0% | 0.0% | 0.3% | 0.6% |
| Carbon Black | 0.1% | 0.1% | 0.1% | 0.1% |
| Gloss (20°) | 95.7 | 93.4 | 93.6 | 93.5 |
| L* | 1.07 | 1.85 | 1.74 | 1.76 |
| a* | -0.15 | -0.35 | -0.39 | -0.36 |
| b* | -0.80 | -1,02 | -0.70 | -0.75 |

The thermoplastic molding compositions of the invention were found dimensionally stable in humid environments. They all have a limited degree of water absorption and have a good UV stability in combination with a high darkness color and high gloss. Shaped articles were made from these thermoplastic molding compositions. The compositions are also advantageously be used for coating (single or multiple layers) on shaped substrates, which can be made of various materials.

## Claims

1. A thermoplastic molding composition, comprising the components (a), (b) and (c) and optionally (d), wherein it comprises:
(a) 90 to 99.5% by weight, in particular 95 to 99.5% by weight, based on the total weight of the thermoplastic molding composition, of at least one copolymer (a), which comprises 30 to 60 % by weight, in particular 40 to 60% by weight, of repeating units derived from a vinylaromatic monomer (a1), in particular styrene, and comprises 40 to 70 % by weight, in particular 40 to 60% by weight, of repeating units derived from methyl methacrylate (a2);
(b) 0.1 to 1.5% by weight, in particular 0.2 to 1.5% by weight, based on the total weight of the thermoplastic molding composition, of at least two dye components (b1) and (b2) of different color families, soluble in the thermoplastic molding composition;
(c) 0.01 to 5% by weight, in particular 0.1 to 3 % by weight, based on the total weight of the thermoplastic molding composition, of carbon black pigment (c); and
(d) optionally up to 5% by weight, in particular 0.1 to 2.0% by weight, based on the total weight of the thermoplastic molding composition, of one or more further additives (d), which are different from (b) and (c);
where the thermoplastic molding composition has a deep-black color with L*-values from 0.5 to 2.0 as measured with 45°/0° geometry in accordance with DIN 5033, a high gloss of more than 93.0 as measured in accordance with DIN 67530,
and wherein the total weight of components (a) to (d) give a total of 100 percent by weight of the thermoplastic molding composition.

2. A thermoplastic molding composition according to claim 1, wherein component (b) comprises at least two different dye components (B1) and (b2), preferably three different dye components (b1), (b2) and (b3), which cover complementary color regions.

3. A thermoplastic molding composition according to claim 1 or 2, wherein component (b) comprises two different dye components (b1) and (b2), which cover complementary color regions, and wherein (b1) and (b2) are used in a weight ratio of 0.8:1 to 1.2 : 1.0.

4. A thermoplastic molding composition according to any of claims 1 to 3, wherein the molding composition comprises, as component (c), from 0.01 to 5% by weight of a carbon black pigment (c), which has an average primary particle size in the range from 5 to 100 nm, preferably 7 to 60 nm.

5. A thermoplastic molding composition according to any of claims 1 to 4, wherein component (a) comprises a copolymer of styrene and/or α-methylstyrene with methyl methacrylate.

6. A thermoplastic molding composition according to any of claims 1 to 5, wherein the copolymer (a) consists of 40 to 58% by weight, preferably 50 to 56% by weight, based on the total weight of copolymer (a), of repeating units derived from styrene, and 42 to 60% by weight, preferably 43 to 48% by weight, based on the total weight of copolymer (a), of repeating units derived from methyl methacrylate.

7. A thermoplastic molding composition according to any of claims 1 to 6 consisting of components (a), (b), (c) and (d).

8. A thermoplastic molding composition according to any one of claims 1 to 7, wherein component (d) is present in an amount of from 0.1 to 2% by weight, based on the total weight of the thermoplastic molding composition, and comprises at least one light stabilizer, in particular a hindered amine light stabilizer (HALS), and/or at least one antioxidant.

9. The thermoplastic molding composition according to any one of claims 1 to 8, wherein component (d) consists of an antioxidant, at least one hindered amine light stabilizer (HALS) and optionally at least one UV absorber different from carbon black.

10. A method for preparing the thermoplastic molding composition according to any one of claims 1 to 9, comprising the step of mixing and/or compounding components (a), (b) and (c), and optionally (d).

11. A method for preparing a shaped article with high gloss and a high darkness color, wherein the thermoplastic molding composition according to any one of claims 1 to 9 is molded into the shape of the shaped article via extrusion, injection molding, rotomolding, casting, blow molding, spraying, spinning, rolling or weaving, in particular extrusion or injection molding.

12. A method for preparing a shaped article with high gloss and a high darkness color, wherein a shaped substrate is coated with the thermoplastic molding composition according to any one of claims 1 to 9.

13. A shaped article comprising the thermoplastic molding composition according to any one of claims 1 to 9.

14. The shaped article according to claim 13, wherein the thermoplastic molding composition according to any one of claims 1 to 9 is present as a coating on a shaped substrate.

15. The use of the thermoplastic molding composition according to any one of claims 1 to 9 for preparing a shaped article with high gloss and a high darkness color.

## Patentansprüche

1. Thermoplastische Formmasse, umfassend die Komponenten (a), (b) und (c) und optional (d), wobei diese umfasst:
(a) 90 bis 99,5 Gew.-%, insbesondere 95 bis 99,5 Gew.-%, bezogen auf das Gesamtgewicht der thermoplastischen Formmasse, mindestens eines Copolymeren (a), welches 30 bis 60 Gew.-%, insbesondere 40 bis 60 Gew.-%, Wiederholungseinheiten umfasst, die von einem vinylaromatischen Monomer (a1), insbesondere Styrol, abgeleitet sind, und 40 bis 70 Gew.-%, insbesondere 40 bis 60 Gew.-% Wiederholungseinheiten umfasst, die von Methylmethacrylat (a2) abgeleitet sind;
(b) 0,1 bis 1,5 Gew.-%, insbesondere 0,2 bis 1,5 Gew.-%, bezogen auf das Gesamtgewicht der thermoplastischen Formmasse, von mindestens zwei Farbstoffkomponenten (b1) und (b2) verschiedener Farbfamilien, die in der thermoplastischen Formmasse löslich sind;
(c) 0,01 bis 5 Gew.-%, insbesondere 0,1 bis 3 Gew.-%, bezogen auf das Gesamtgewicht der thermoplastischen Formmasse, an Carbon Black Pigment (c); und
(d) optional bis zu 5 Gew.-%, insbesondere 0,1 bis 2,0 Gew.-%, bezogen auf das Gesamtgewicht der thermoplastischen Formmasse, eines oder mehrerer weiterer Additive (d), die von (b) und (c) verschieden sind;
wobei die thermoplastische Formmasse eine tiefschwarze Farbe mit L*-Werten von 0,5 bis 2,0 gemessen mit 45°/0° Geometrie gemäß DIN 5033, einen hohen Glanz von über 93,0 gemessen nach DIN 67530 aufweist,
und wobei das Gesamtgewicht der Komponenten (a) bis (d) 100 Gew.-% der thermoplastischen Formmasse ergeben.

2. Thermoplastische Formmasse gemäß Anspruch 1, wobei die Komponente (b) mindestens zwei verschiedene Farbstoffkomponenten (b1) und (b2), vorzugsweise drei verschiedene Farbstoffkomponenten (b1), (b2) und (b3) umfasst, die komplementäre Farbbereiche abdecken.

3. Thermoplastische Formmasse gemäß Anspruch 1 oder 2, wobei die Komponente (b) zwei verschiedene Farbstoffkomponenten (b1) und (b2) umfasst, die komplementäre Farbbereiche abdecken, und wobei (b1) und (b2) in einem Gewichtsverhältnis von 0,8:1 bis 1,2:1,0 verwendet werden.

4. Thermoplastische Formmasse gemäß einem beliebigen der Ansprüche 1 bis 3, wobei die Formmasse als Komponente (c) 0,01 bis 5 Gew.-% eines Carbon Black Pigments (c) enthält, welches eine mittlere Primärpartikelgröße im Bereich von 5 bis 100 nm, vorzugsweise 7 bis 60 nm umfasst.

5. Thermoplastische Formmasse gemäß einem beliebigen der Ansprüche 1 bis 4, wobei Komponente (a) ein Copolymer von Styrol und/oder α-Methylstyrol mit Methylmethacrylat umfasst.

6. Thermoplastische Formmasse gemäß einem beliebigen der Ansprüche 1 bis 5, wobei das Copolymer (a) aus 40 bis 58 Gew.-%, vorzugsweise 50 bis 56 Gew.-%, bezogen auf das Gesamtgewicht des Copolymeren (a), an Wiederholungseinheiten, die von Styrol abgeleitet sind, und 42 bis 60 Gew.-%, vorzugsweise 43 bis 48 Gew.-%, bezogen auf das Gesamtgewicht des Copolymeren (a), an Wiederholungseinheiten, die von Methylmethacrylat abgeleitet sind, besteht.

7. Thermoplastische Formmasse gemäß einem beliebigen der Ansprüche 1 bis 6, bestehend aus den Komponenten (a), (b), (c) und (d).

8. Thermoplastische Formmasse gemäß einem beliebigen der Ansprüche 1 bis 7, wobei Komponente (d) in einer Menge von 0,1 bis 2 Gew.-%, bezogen auf das Gesamtgewicht der thermoplastischen Formmasse, vorhanden ist und mindestens einen Lichtstabilisator, insbesondere einen gehinderten Amin-Lichtstabilisator (HALS), und/oder mindestens ein Antioxidans umfasst.

9. Thermoplastische Formmasse gemäß einem beliebigen der Ansprüche 1 bis 8, wobei die Komponente (d) aus einem Antioxidans, mindestens einem gehinderten Amin-Lichtstabilisator (HALS) und optional mindestens einem von Carbon Black verschiedenen UV-Absorber besteht.

10. Verfahren zur Herstellung der thermoplastischen Formmasse gemäß einem beliebigen der Ansprüche 1 bis 9, umfassend den Schritt des Mischens und/oder Compoundierens der Komponenten (a), (b) und (c) und gegebenenfalls (d).

11. Verfahren zur Herstellung eines geformten Artikels mit hohem Glanz und hoher Dunkelheitsfarbe, wobei die thermoplastische Formmasse gemäß einem beliebigen der Ansprüche 1 bis 9 durch Extrusion, Spritzgießen, Rotationsformen, Gießen, Blasformen, Sprühen, Spinnen, Walzen oder Weben, insbesondere Extrusion oder Spritzgießen, in die Form des geformten Artikels gebracht wird.

12. Verfahren zur Herstellung eines geformten Artikels mit hohem Glanz und hoher Dunkelheitsfarbe, wobei ein geformtes Substrat mit der thermoplastischen Formmasse gemäß einem beliebigen der Ansprüche 1 bis 9 beschichtet wird.

13. Geformter Artikel, umfassend die thermoplastische Formmasse gemäß einem beliebigen der Ansprüche 1 bis 9.

14. Geformter Artikel gemäß Anspruch 13, wobei die thermoplastische Formmasse gemäß einem beliebigen der Ansprüche 1 bis 9 als Beschichtung auf einem geformten Substrat vorliegt.

15. Verwendung der thermoplastischen Formmasse gemäß einem beliebigen der Ansprüche 1 bis 9 zur Herstellung eines geformten Artikels mit hohem Glanz und hoher Dunkelheitsfarbe.

## Revendications

1. Composition de moulage thermoplastique, comprenant les composants (a), (b) et (c) et éventuellement (d), qui comprend :
(a) 90 à 99,5 % en poids, en particulier 95 à 99,5 % en poids, sur la base du poids total de la composition de moulage thermoplastique, d'au moins un copolymère (a), qui comprend 30 à 60 % en poids, en particulier 40 à 60 % en poids, de motifs répétitifs issus d'un monomère vinylaromatique (a1), en particulier le styrène, et comprend 40 à 70 % en poids, en particulier 40 à 60 % en poids, de motifs répétitifs issus du méthacrylate de méthyle (a2) ;
(b) 0,1 à 1,5 % en poids, en particulier 0,2 à 1,5 % en poids, sur la base du poids total de la composition de moulage thermoplastique, d'au moins deux composants colorants (b1) et (b2) de familles de couleur différentes, solubles dans la composition de moulage thermoplastique ;
(c) 0,01 à 5 % en poids, en particulier 0,1 à 3 % en poids, sur la base du poids total de la composition de moulage thermoplastique, de pigment de noir de carbone (c) ; et
(d) éventuellement jusqu'à 5 % en poids, en particulier 0,1 à 2,0 % en poids, sur la base du poids total de la composition de moulage thermoplastique, d'un ou plusieurs autres additifs (d), qui sont différents de (b) et (c) ;
la composition de moulage thermoplastique ayant une couleur noire profonde dotée de valeurs de L* de 0,5 à 2,0 comme mesurées avec une géométrie 45°/0° conformément à la norme DIN 5033, une brillance élevée de plus de 93,0 comme mesurée conformément à la norme DIN 67530,
et le poids total des composants (a) à (d) donnant un total de 100 pour cent en poids de la composition de moulage thermoplastique.

2. Composition de moulage thermoplastique selon la revendication 1, le composant (b) comprenant au moins deux composants colorants différents (B1) et (b2), préférablement trois composants colorants différents (b1), (b2) et (b3), qui couvrent des régions de couleur complémentaires.

3. Composition de moulage thermoplastique selon la revendication 1 ou 2, le composant (b) comprenant deux composants colorants différents (b1) et (b2), qui couvrent des régions de couleur complémentaires, et (b1) et (b2) étant utilisés en un rapport en poids de 0, 8 : 1 à 1,2 : 1,0.

4. Composition de moulage thermoplastique selon l'une quelconque des revendications 1 à 3, la composition de moulage comprenant, en tant que composant (c), de 0,01 à 5 % en poids d'un pigment de noir de carbone (c), qui possède une taille moyenne de particule primaire dans la plage de 5 à 100 nm, préférablement 7 à 60 nm.

5. Composition de moulage thermoplastique selon l'une quelconque des revendications 1 à 4, le composant (a) comprenant un copolymère de styrène et/ou de α-méthylstyrène avec le méthacrylate de méthyle.

6. Composition de moulage thermoplastique selon l'une quelconque des revendications 1 à 5, le copolymère (a) étant constitué de 40 à 58 % en poids, préférablement 50 à 56 % en poids, sur la base du poids total du copolymère (a), de motifs répétitifs issus du styrène, et 42 à 60 % en poids, préférablement 43 à 48 % en poids, sur la base du poids total du copolymère (a), de motifs répétitifs issus du méthacrylate de méthyle.

7. Composition de moulage thermoplastique selon l'une quelconque des revendications 1 à 6 constituée des composants (a), (b), (c) et (d).

8. Composition de moulage thermoplastique selon l'une quelconque des revendications 1 à 7, le composant (d) étant présent en une quantité allant de 0,1 à 2 % en poids, sur la base du poids total de la composition de moulage thermoplastique, et comprenant au moins un photostabilisant, en particulier un photostabilisant de type amine encombrée (HALS), et/ou au moins un antioxydant.

9. Composition de moulage thermoplastique selon l'une quelconque des revendications 1 à 8, le composant (d) étant constitué d'un antioxydant, d'au moins un photostabilisant de type amine encombrée (HALS) et éventuellement d'au moins un absorbeur d'UV différent du noir de carbone.

10. Procédé pour la préparation de la composition de moulage thermoplastique selon l'une quelconque des revendications 1 à 9, comprenant l'étape de mélange et/ou de compoundage des composants (a), (b) et (c), et éventuellement (d).

11. Procédé pour la préparation d'un article façonné doté d'une brillance élevée et d'une couleur hautement sombre, la composition de moulage thermoplastique selon l'une quelconque des revendications 1 à 9 étant moulée en la forme de l'article façonné via une extrusion, un moulage par injection, un rotomoulage, une coulée, un moulage par soufflage, une pulvérisation, une centrifugation, un roulage ou un tissage, en particulier une extrusion ou un moulage par injection.

12. Procédé pour la préparation d'un article façonné doté d'une brillance élevée et d'une couleur hautement sombre, un substrat façonné étant revêtu avec la composition de moulage thermoplastique selon l'une quelconque des revendications 1 à 9.

13. Article façonné comprenant la composition de moulage thermoplastique selon l'une quelconque des revendications 1 à 9.

14. Article façonné selon la revendication 13, la composition de moulage thermoplastique selon l'une quelconque des revendications 1 à 9 étant présente en tant que revêtement sur un substrat façonné.

15. Utilisation de la composition de moulage thermoplastique selon l'une quelconque des revendications 1 à 9 pour la préparation d'un article façonné doté d'une brillance élevée et d'une couleur hautement sombre.
